# EUROPÄISCHE PATENTANMELDUNG

(11) **EP 1 691 052 A1**
(43) Veröffentlichungstag der Anmeldung: **16.08.2006**
(21) Anmeldenummer: 05026361.5
(22) Anmeldetag: 02.12.2005
(51) Int. Cl.: F02B 37/013, F01N 3/20

(54) **Abgasanlage für eine Brennkraftmaschine**

(30) Priorität: 18.01.2005 DE 102005002251
(71) Anmelder: Bayerische Motorenwerke Aktiengesellschaft, 80809 München (DE)
(72) Erfinder: Fahl, Thomas, 80802 München (DE); Uhlirsch, Ulrich, 84424 Isen (DE)

(57) **Zusammenfassung**

Abgasanlage (1) für eine Brennkraftmaschine (2) mit einem ersten, motornahen und einem zweiten Abgasturbolader (3, 4), deren Turbinen (3', 4') in Reihe angeordnet und über ein abgasführendes Rohr (5) miteinander verbunden sind, wobei eine schaltbare Umgehungsleitung (6) für die Turbine (3') des ersten Abgasturboladers (3) vorgesehen ist, die in Strömungsrichtung vor einem Turbineneinlass (4") des zweiten Abgasturboladers (4) in einer Mündungsstelle (13) in das Rohr (5) mündet, wobei in dem Rohr (5) zwischen einem Abgasauslass (3") des ersten Abgasturboladers (3) und der Mündungsstelle (13) eine Abgasreinigungsanlage (7) angeordnet ist.

Durch die vorgeschlagene Anordnung der Abgasreinigungsanlage wird das light-off-Verhalten verbessert, sowie ein Schutz vor thermischer Zerstörung erzielt.

## Beschreibung

Die Erfindung betrifft eine Abgasanlage für eine Brennkraftmaschine mit den Merkmalen aus dem Oberbegriff des Patentanspruchs 1.

Sie geht von der deutschen Offenlegungsschrift DE 198 37 978 A1 aus, in der unterschiedliche Anordnungen von Abgasturboladern für Brennkraftmaschinen beschrieben sind. Alle Anordnungen sind Stufenaufladungen mit jeweils einem motornahen Abgasturbolader und einem motorfernen Abgasturbolader. Der motornahe Abgasturbolader ist aus Dynamikgründen jeweils kleiner ausgeführt als der motorferne Abgasturbolader, wobei die Turbine des kleinen Abgasturboladers vor allem bei niedrigen Brennkraftmaschinen-Drehzahlen, bzw. niedriger Brennkraftmaschinen-Last mit Abgas beaufschlagt wird. Um bei hohen Drehzahlen der Brennkraftmaschine einen ausreichenden Massendurchsatz von Ansaugluft zu gewährleisten, weist der motornahe Abgasturbolader eine zu- und abschaltbare Umgehungsleitung auf, die eine direkte Verbindung zwischen Abgaskrümmer und Turbineneingang des motorfernen Abgasturboladers gewährleistet. Durch diese Umgehungsleitung ist der motornahe Abgasturbolader, insbesondere bei hohen Drehzahlen, bzw. Last der Brennkraftmaschine praktisch außer Betrieb.

Die vorgeschlagene Abgasturboladeranordnung ist für einen sehr breiten Drehzahlbereich der Brennkraftmaschine dimensioniert.

Aufgabe der vorliegenden Erfindung ist es, eine früh nach einem Start der Brennkraftmaschine funktionierende und weitgehend thermisch vor einer Zerstörung geschützte Abgasreinigungsanlage in eine gattungsgemäße Abgasturboladeranordndung zu integrieren.

Diese Aufgabe wird durch das Merkmal im kennzeichnenden Teil des Patentanspruchs 1 dadurch gelöst, dass in dem Rohr zwischen dem Abgasauslass des ersten Abgasturboladers und der Mündungsstelle die Abgasreinigungsanlage angeordnet ist.
Durch die erfindungsgemäße Ausgestaltung ist ein schnelles Anspringen der exothermen Reaktion zur Abgasreinigung, d. h. eine kurze light-off Zeit der Abgasreinigungsanlage, einem Katalysator, gewährleistet und dadurch die Erfüllung strengster Abgas-Emissionsvorschriften bei geringem finanziellen Aufwand möglich. Darüber hinaus benötigt die vorgeschlagene Ausgestaltung sehr wenig Platz. Als weiterer Vorteil ist die geringe Systemalterung zu nennen, da die Abgasreinigungsanlage in Form eines Startkatalysators nur bei niedrigen Abgastemperaturen, d. h. bei geringen Drehzahlen und/oder geringer Last, mit heißem Abgas beaufschlagt wird. Bei hohen Drehzahlen und/hoher Last wird nur der zweite, motorferne Abgasturbolader mit Abgas beaufschlagt.

In vorteilhafter Weise kann gemäß Patentanspruch 2 ein twin-scroll-Abgasturbolader als motornaher Abgasturbolader eingesetzt werden. Dies ermöglicht eine zylinderselektive Beaufschlagung der Turbine des ersten Abgasturboladers mit Abgas.

Im Folgenden ist die Erfindung anhand eines bevorzugten Ausführungsbeispieles in einer einzigen Figur näher erläutert.

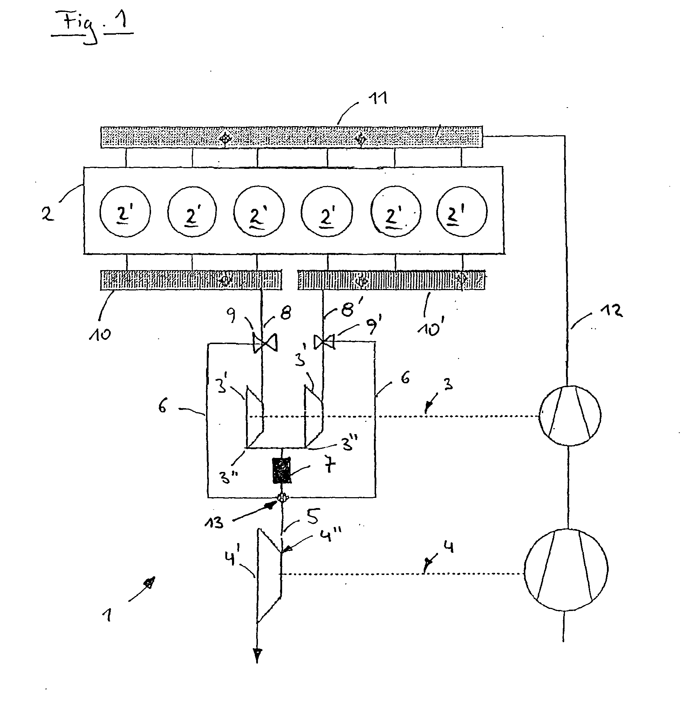

Fig. 1 zeigt schematisch eine Abgasanlage 1 einer Brennkraftmaschine 2. Die Brennkraftmaschine 2 weist sechs in Reihe angeordnete Zylinder 2' auf. Saugseitig ist an die Brennkraftmaschine 2 ein Luftsammler 11 mit einer Sauganlage 12 angeordnet. Abgasseitig sind an die Brennkraftmaschine 2 zwei Abgassammler 10, 10' angeordnet, die Abgas zylinderselektiv durch zwei Abgasrohre 8, 8' zu einem ersten Abgasturbolader 3 leiten. Der erste Abgasturbolader 3 ist ein Twin-Scroll-Abgasturbolader mit zwei Turbinen 3'. Ein nicht näher bezeichneter Verdichter des ersten Abgasturboladers 3 ist in der Sauganlage 12 angeordnet. Das Abgas verlässt den ersten Abgasturbolader durch einen Abgasauslass 3", ein gemeinsamer Auslass für beide Turbinen 3' und durchströmt anschließend eine Abgasreinigungsanlage 7, einen motornahen Katalysator. Nach der Abgasreinigungsanlage 7 wird das Abgas durch ein Rohr 5 zu einer Turbine 4' eines zweiten Abgasturboladers 4 geleitet, dessen Verdichter ebenfalls nicht näher bezeichnet in der Sauganlage 12 angeordnet ist. Weiter weisen die Abgasrohre 8, 8' jeweils ein Schaltelement 9, 9' auf, mit denen das Abgas durch je eine Umgehungsleitung 6 um je eine Turbine 3' des ersten Abgasturboladers 3 herumgeleitet werden können. Die Umgehungsleitung 6 mündet in Abgasströmungsrichtung nach der Abgasreinigungsanlage 7 und vor dem zweiten Abgasturbolader 4 in einer Mündungsstelle 13 in dem Rohr 5.

Beim Betrieb der Brennkraftmaschine gibt es zumindest zwei drehzahl- und lastabhängige Betriebszustände für die Abgasanlage 1. Bei niedriger Last bzw. Drehzahl sind die Schaltelemente 9, 9' derart geschaltet, dass der gesamte Abgasmassenstrom durch die Turbinen 3' des ersten Abgasturboladers 3 geleitet wird. Anschließend durchströmt das Abgas die Abgasreinigungsanlage 7 und weiter die Turbine 4' des zweiten Abgasturboladers 4. Durch die erfindungsgemäße Ausgestaltung wird die Abgasreinigungsanlage 7 schon bei niedrigen Drehzahlen und niedriger Last sehr schnell aufgeheizt und erreicht damit sehr schnell ihre Betriebstemperatur, die zur Konvertierung der Schadstoffe im Abgas notwendig ist. Werden die Last oder die Drehzahl der Brennkraftmaschine 2 erhöht, so werden die Abgase heißer, wodurch es zu einer thermischen Schädigung der motornah angeordneten Abgasreinigungsanlage 7 kommen kann. Daher werden ab einer definierten Last bzw. Drehzahl die Schaltelemente 9, 9' derart geschalten, dass der gesamte Abgasmassenstrom durch die Umgehungsleitungen 6 an dem ersten Abgasturbolader 3 sowie an der Abgasreinigungsanlage 7 herumgeleitet wird und nur die Turbine 4' des Abgasturboladers 4 mit dem Abgasmassenstrom beaufschlagt wird.

Durch die erfindungsgemäße Ausgestaltung ist gewährleistet, dass sowohl der erste Abgasturbolader 3 als auch die Abgasreinigungsanlage 7 nur bei niedrigen Drehzahlen bzw. niedriger Last der Brennkraftmaschine mit Abgas beaufschlagt werden, wodurch der kleinbauende erste Abgaskatalysator 3 ein sehr gutes Ansprechverhalten aufweist. Darüber hinaus ist gleichzeitig ein thermischer Überlastungsschutz für die Abgasreinigungsanlage 7 gegeben. Da nur bei höherer Last bzw. höherer Drehzahl der Brennkraftmaschine 2 der zweite Abgasturbolader 4 mit dem Abgasmassenstrom beaufschlagt wird, kann dieser größer gebaut werden, um auch bei höchsten Drehzahlen der Brennkraftmaschine ausreichend Ansaugluft mit seinem Verdichter zu verdichten. Somit kann die Brennkraftmaschine 2 über ein weites Drehzahlband bestmöglich betrieben werden. In einer weiteren Ausführungsform kann der erste Abgasturbolader 3 auch eine einzige Turbine 3' aufweisen, die zweiflutig von den Abgasrohen 8, 8' angeströmt wird. Ferner kann an Stelle des twinn-scroll-Abgasturboladers auch ein einflutiger Abgasturbolader als motornaher, erster Abgasturbolader 3 verwendet werden.

Durch die erfindungsgemäße Ausgestaltung ist ein schnelles Anspringen der Abgasreinigungsanlage 7, des Katalysators gesichert und dadurch ist die Erfüllung strengster Emissionsvorschriften bei geringem finanziellen Aufwand möglich. Weiter benötigt der vorgeschlagene Aufbau sehr wenig Platz. Als besonders vorteilhaft ist die geringe Systemalterung der Abgasreinigungsanlage 7 zu nennen, da diese nur von Abgas mit niedrigen Abgastemperaturen beaufschlagt bzw. betrieben wird.

### Bezugszeichenliste

- 1: Abgasanlage
- 2: Brennkraftmaschine
- 2': Zylinder
- 3: Erster Abgasturbolader
- 3': Turbine erster Abgasturbolader
- 3": Abgasauslass
- 4: Zweiter Abgasturbolader
- 4': Turbine zweiter Abgasturbolader
- 4": Turbineneinlass
- 5: Rohr
- 6: Umgehungsleitung
- 7: Abgasreinigungsanlage
- 8, 8': Abgasrohr
- 9, 9': Schaltelement
- 10, 10': Abgassammler
- 11: Luftsammler
- 12: Sauganlage
- 13: Mündungsstelle

## Patentansprüche

1. Abgasanlage (1) für eine Brennkraftmaschine (2) mit einem ersten, motornahen und einem zweiten Abgasturbolader (3, 4), deren Turbinen (3', 4') in Reihe angeordnet und über ein Abgas führendes Rohr (5) miteinander verbunden sind, wobei eine schaltbare Umgehungsleitung (6) für die Turbine (3') des ersten Abgasturboladers (3) vorgesehen ist, die in Strömungsrichtung vor einem Turbineneinlass (4") des zweiten Abgasturboladers (4) in einer Mündungsstelle (13) in das Rohr (5) mündet, **dadurch gekennzeichnet, dass** in dem Rohr (5) zwischen einem Abgasauslass (3") des ersten Abgasturboladers (3) und der Mündungsstelle (13) eine Abgasreinigungsanlage (7) angeordnet ist.

2. Abgasanlage nach Patentanspruch 1,
**dadurch gekennzeichnet, dass** der erste Abgasturbolader (3) ein twin-scroll-Abgasturbolader ist und die Abgase zylinderselektiv von der Brennkraftmaschine (2) in zwei Abgasrohren (8, 8') zum ersten Abgasturbolader (3) geführt sind.
